# EUROPEAN PATENT APPLICATION

(11) **EP 2 924 646 A1**
(43) Date of publication of application: **30.09.2015**
(21) Application number: 13857594.9
(22) Date of filing: 21.11.2013
(51) Int. Cl.: G06Q 50/10

(54) **ONLINE RESPONSE QUIZ GAMING SYSTEM AND METHOD THEREOF**

(30) Priority: 23.11.2012 KR 20120133976
(71) Applicant: KSEEK CO., LTD., Daejeon 302-869 (KR)
(72) Inventor: KIM, Young-real, Daejeon 305-759 (KR)
(74) Representative: Gille Hrabal
(86) International application number: PCT/KR2013/010629
(87) International publication number: WO 2014/081224

(57) **Abstract**

According to one embodiment of the present invention for achieving the objective described above, a quiz server receives question answers and quiz answers, which are inputted by response quiz participants using quiz terminals, from connected quiz terminals, determines the best answer by analyzing the question answers, scores the quiz answers of the participants by using the best answer determined through the question answers of the participants, and reflects a scoring result to the participants. In addition, the quiz server is characterized by performing, in detail, an attitude survey or a questionnaire survey of the participants by analyzing the question answers and the quiz answers in the above process.

## Description

### Technical Field

The present invention relates to a system and method for providing a reactive quiz game using a quiz terminal of a quiz participant connected to an online quiz server through a communication network by the online quiz server which provides an online quiz game in which a user solves a quiz through the communication network using the quiz terminal. More specifically, the present invention relates to a system and method for providing a reactive quiz game in which, in response to a quiz participant inputting an answer to a quiz question or a survey transmitted from a quiz server using a quiz terminal, the quiz terminal transmits the answer to the quiz server, and the quiz server determines a best answer to the quiz question based on the answer of the participant, scores the answer of the participant using the best answer, and determines a ranking or whether the participant survives by reflecting a result of scoring.

### Background Art

Advances in the Internet and a communication system have contributed to provision of a variety of online quiz game services. The online quiz game services may be provided by a company for promotional purposes, and a solution to a question may be provided for an educational purpose. People may simultaneously participate in a quiz game online irrespective of space, and a participant may have an interest in analysis data, examples, etc. for answers of participants.

A conventional online quiz game service is characterized in that a correct answer to a quiz question is predetermined. A person who has solved a particular quiz has an advantage when the person participates in a subsequent online quiz game and the particular quiz is set again. Moreover, since the conventional online quiz game service has answers which are previously determined, the answers may be easily found through the Internet, etc. Therefore, the conventional online quiz game service is not suitable to determine a winner of a quiz game among participants in distant places. In addition, when types of problems are small in number, the problems have levels of difficulty that gradually decrease as users repeatedly solve the problems.

Such a conventional technology employs a method, in which a server that conducts an online survey asks users opinions using terminal units such as a personal computer (PC), etc. connected through communication means such as the Internet, and performs statistical processing or analyzes the opinions, thereby asking intentions of survey participants. In general, this type of method is performed such that the participants asynchronously proceed with the survey. In addition, as the number of questions of the survey increases, a degree of participation in the survey decreases. A procedure for confirming a result of the online survey by the participants may attract interests of some people. However, it is difficult to analyze and recognize a difference between a survey about opinions or preferences of people and a determination on thoughts of other people.

### Disclosure

### Technical Problem

The present invention has been conceived to solve the above-mentioned problem, and an object of the present invention is to provide a system and method in which a reactive quiz targeted for an online quiz game participant is prepared, data on the reactive quiz which includes a question or a quiz is transmitted to a quiz terminal used by the quiz game participant, a suggested answer to the question or the quiz is transmitted to a quiz server in response to the answer input by the participant, and the quiz server receiving the answer determines a best answer based on the answer of the participant, scores the answer of the participant, and reflects a result of scoring in the participant. In addition, the present invention proposes a method for a more interesting reactive quiz game by analyzing consciousnesses, opinions, and preferences of target participants through a game having a fun factor of solving a quiz using a survey-type reactive quiz, and allowing the participants to confirm the analysis.

### Technical solution

To solve the above-mentioned problem, according to an aspect of the present invention, there is provided a quiz server which receives an answer to a quiz or a survey from a quiz terminal used by an online quiz game participant, determines a best answer based on the received answer to the survey, scores the answer to the quiz using the best answer, and reflects a result of scoring in the participant transmitting the answer to the quiz.

Here, the participant corresponds to one participant or a participating team including a plurality of participants. The quiz terminal may correspond to one of a mobile phone, a phone, a smartphone, a smart TV, and a personal computer (PC), and the participant may transmit an answer to the quiz server connected through a communication network using the quiz terminal. In addition, the quiz server may transmit at least one of information related to reflection of the result of scoring, the result of scoring, and the best answer.

The quiz server may include a communication module capable of exchanging data with the quiz terminal, and a quiz module which manages quiz problems, processes the answer to the quiz, determines the best answer, scores the answer, and reflects a result of scoring in the participant. In addition, the quiz server may further include a member management module which manages a participation history, personal information, etc. of the participant, or processes log-ins, and may further include a database to store various quiz-related data, personal information, and information about a history.

The member management module may classify several participants into a plurality of teams using a predetermined scheme, and separately process an answer of a particular participating team or participant to determine the best answer.

According to another aspect of the present invention for resolving the above-mentioned problem, there is provided a method for a reactive quiz game performed by a quiz server including receiving an answer to a quiz or a survey of a participant from a quiz terminal, determining a best answer from an accumulated ranking of the answer to the survey or determining a particular answer to the survey to be a best answer of the quiz, scoring the received answer to the quiz using the best answer, and reflecting a result of scoring in the participant.

Here, the reactive quiz game method may further include transmitting at least one of the best answer, the result of scoring, a result of reflecting the result of scoring, and information about a ranking of a participant.

Here, the quiz may have a form of an objective question in which one or more answers are selected from a plurality of determined suggested answers or a subjective question in which an answer is directly input rather than suggested answers are provided. In addition, the quiz may further include a survey for determining a best answer. The survey may include a survey question, and include suggested answers in the objective question. When the survey and the quiz have the same suggested answer, the survey may not include a separate suggested answer. In a reactive quiz including both a survey question and a quiz question, all quiz participants may select or input a survey answer and a quiz answer. In addition, a plurality of quiz participants may be classified into two groups to transmit a survey question to one of the groups and transmit a quiz question to the other group, and each participant may input a survey answer or a quiz answer. When the server receives the survey answer and the quiz answer, the server may deduce a best answer from the survey answer corresponding to an answer to the survey question, and reflect a result of scoring each quiz answer in the participant.

In addition, the participant may correspond to a participating team separated by a predetermined scheme or one participant. The quiz may be a reactive quiz and correspond to one of a survey-type reactive quiz including a survey of a participant, a match-type reactive quiz in which an answer is scored based on a conformity degree between designated participants, and a relation-type reactive quiz in which an answer is scored based on a relation between answers of participants or a relation between actions or answers of particular people.

### Advantageous Effects

According to the present invention, a user that uses a quiz terminal connected through a communication network may enjoy a reactive quiz service with several other people accessing a quiz server at the same time by answering a quiz or a survey suggested by the quiz server. Since all participants cannot easily solve a problem using separate search means, it is possible to achieve a fair competition for solving a quiz.

In addition, according to the present invention, it is possible to survey participants through a survey-type reactive quiz. In this way, it is possible to analyze consciousnesses of target participants or pros and cons on a particular issue. In particular, it is possible to prevent a distortion of a result of a survey which may occur in a scheme of scoring an answer to the survey based on a best answer obtained by analyzing answers to the survey.

### Brief Description of the Drawings

The above and other objects, features and advantages of the present invention will be more apparent from the following detailed description taken in conjunction with the accompanying drawings, in which:
Figure 1 is a diagram schematically illustrating configurations of a quiz server and a quiz terminal serving as bases of Embodiment 1;
Figure 2 is a block diagram of the quiz server serving as the base of Embodiment 1; and
Figure 3 is a flowchart of a reactive quiz service of Embodiment 1.

### Best Mode

### Mode for Invention

Hereinafter, embodiments of the present invention will be described in detail with reference to accompanying drawings. In the drawings, parts irrelevant to the description are omitted for a clear explanation of the present invention, and the same reference numeral is applied to the same parts throughout the specification.

Throughout the specification, when a part is described as including an element, it should be interpreted that other elements may be further included rather than being excluded unless mentioned otherwise. In addition, a term such as a "∼ unit", a "∼ module", etc. described in the specification refers to a unit that processes at least one function or operation, and may be implemented in a hardware form or a software form, or a combination of the hardware form and the software form.

While a best answer to a problem is previously determined in a general quiz, throughout the specification, a "reactive quiz" refers to a quiz in which, even though a best answer to a problem is not previously determined, a best answer is determined based on answers or responses from quiz participants according to a predetermined scheme, and suggested answers of the quiz participants are scored.

According to types, the reactive quiz is divided into a survey-type reactive quiz in which answers to a quiz are scored by determining an answer corresponding to a particular ranking or an order of accumulated values of answers as a best answer based on a result of analyzing accumulated values of the answers, a match-type reactive quiz in which an answer of a particular participant is determined to be a best answer and answers of other participants are scored based on whether the answers match the best answer, and a relation-type reactive quiz in which an answer of a particular participant is determined to be a best answer and answers of other participants are scored based on a relation between the best answer and the answers.

Throughout the specification, the "best answer" refers to an answer deduced from answers transmitted from terminals in response to a reactive quiz based on a "requirement for the best answer" designated in the reactive quiz. The best answer is used as a criterion for scoring the answers transmitted from the terminals in response to the reactive quiz.

Throughout the specification, the "requirement for the best answer" refers to data obtained by designating a scheme of deducing a best answer from answers corresponding to a reactive quiz in a form of a rule, etc.

Throughout the specification, an "answer" refers to data input by a participant through a terminal and transmitted to a server, and refers to at least one of answers to a quiz question or answers to a survey.

### <Types of reactive quiz>

The reactive quiz may be divided into several types according to performance schemes.

First, a survey-type reactive quiz corresponds to one of the types. In the survey-type reactive quiz, a survey is further included, answers to the survey are received by questioning participants on opinions, answers to a quiz are received, a best answer is determined based on the answers to the survey, the answers to the quiz are scored based on the determined best answer, and a result of scoring is reflected in the participants.

The result of scoring is basically reflected in the participants who answer the quiz. However, a result of scoring of a person that suggests a particular answer to the quiz may be reflected such that a competitor loses a score or is eliminated. Therefore, the result of scoring may not be restrictively reflected in the participants who answer the quiz.

The survey-type reactive quiz may be divided into an objective survey-type reactive quiz which includes a plurality of instances such that at least one of the instances is selected and a subjective survey-type reactive quiz in which a participant directly inputs an answer. It is possible to include a hybrid survey-type reactive quiz in which a survey and a quiz have different forms such as an objective form and a subjective form. In the objective survey-type reactive quiz, a suggested answer may be different between a survey and a quiz, and the same suggested answer may be used. A suggested answer to an objective survey may be text, image, sound, or video data, transmitted as a number or a symbol, or have a form such as Yes/No, O/X, etc. Data such as sound, text, a picture, an image, etc. may be input as a subjective answer.

Examples of the subjective survey-type reactive quiz include a form which includes a survey of "Input a food you wish to eat the most for a late-night meal!" and a quiz of "What food ranks first among foods desired for a late-night meal?".

When an instance of the subjective survey-type reactive quiz further includes suggested answers "1. Hot dog, 2. Hamburger, and 3. Fried potato", the objective survey-type reactive quiz is created. In an objective quiz in which the survey includes examples, the quiz may correspond to "Guess the order of popularity of late-night meals" or "Guess the food that ranks first among foods desired by female participants and the food that ranks first among foods desired by male participants".

Examples of other types of reactive quizzes include a match-type reactive quiz. In the match-type reactive quiz, a participating team scores when answers to a quiz suggested by members of the team match each other. For example, when a plurality of couples participate as teams in a quiz game, and a quiz corresponds to "What your first child wants to be in the future?", a team scores if answers of members of the team match each other.

In another survey-type reactive quiz, objective suggested answers of participants except for a particular participant may be selectively input based on the particular participant, or subjective answers are input, a particular answer to a survey input by the particular participant is determined to be a best answer, answers of other participants are scored, thereby reflecting a result of scoring in the particular participant based on a rate or the number of matching answers or reflecting a result of scoring in the other participants or a team of the other participants depending on whether the answers match each other. In the match-type reactive quiz, a best answer is determined by regarding an answer of a particular person submitting an answer as an answer to a survey.

Examples of other types of reactive quizzes include a relation-type reactive quiz. In the relation-type reactive quiz, a relation between answers is used for scoring. Examples of the relation-type reactive quiz may include the rock-paper-scissors game. Based on a particular answer to a survey input by a particular participant, an answer of another participant is examined. In response to the other participant winning, drawing, or losing against the answer of the particular participant, a score is increased or decreased, a participant is disqualified, or a winner is determined.

A quiz game, in which the rock-paper-scissors game is continuously performed based on a particular participant and a survivor who does not lose to the particular participant is determined among a plurality of other participants, corresponds to the type. When an answer "scissors" is received from a quiz terminal of the particular participant, a best answer is "scissors" or "paper". A final survivor is determined through several steps of the quiz game in which a person who gives a correct answer corresponding to the best answer survives and a person who gives a wrong answer is eliminated. Here, the answer of the particular participant is processed as an answer to a survey, and answers of the other participants are processes as answers to a quiz.

Examples of the relation-type quiz may further include Shiritori. In Shiritori, participants take turns to input words in a predetermined time such that a participant inputs a word that starts with a letter corresponding to a last letter of a word which is input by a previous participant. A dictionary database (DB) is used to determine validity of a word, and scoring may be performed by determining a correlation between letters used for the word. Here, the previous word corresponds to an answer to a survey, and the following answer corresponds to an answer to a quiz. When the answer to the quiz is correct, the operation proceeds to an answer to a survey with respect to an answer to a subsequent quiz.

As described in the foregoing, the reactive quiz refers to a quiz in which a best answer is determined based on answers of quiz participants to a survey and an answer of a quiz participant is scored using the best answer. The forms and examples of the reactive quiz separately introduced above are provided to help understand the present invention. The present invention is not limited thereto, and a quiz having a similar form or a form extended from the above forms may be regarded as the reactive quiz. Referring to a quiz and a survey, a concept of the present invention is not restricted to a general quiz having a question. Even when a quiz has a form of a game which is formally recognized by participants such as the rock-paper-scissors game, if the quiz has a form in which an answer to a survey input by a participant is transmitted to a quiz server, a best answer is determined, and an answer of a participant to a quiz is scored using the best answer, the quiz is regarded as a category of the reactive quiz. An answer to a reactive quiz may be determined using associated information such as a distribution of time of arrival of a particular answer in addition to pros and cons and ranking of a participant with respect to a survey as a basis of a best answer.

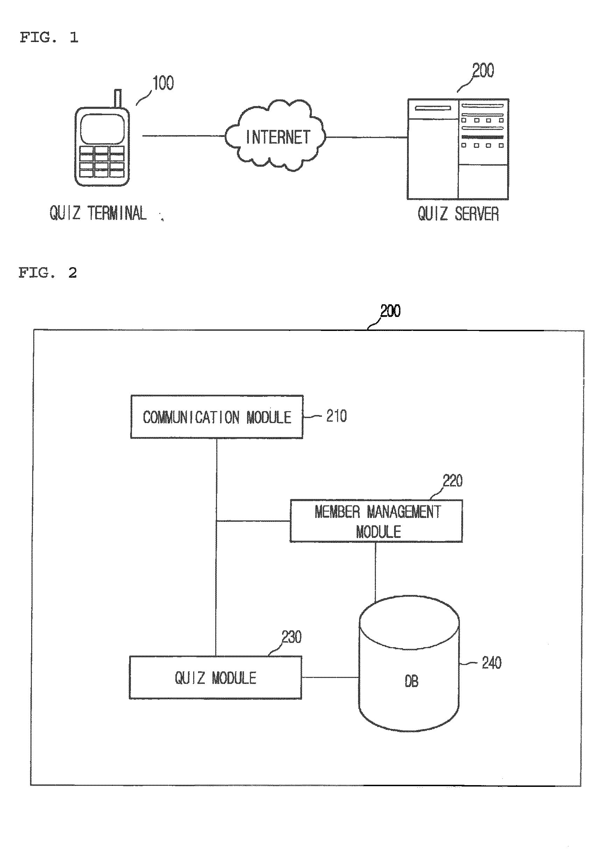

An embodiment of the present invention will be described below with reference to Figure 1. A reactive quiz game system proposed by the present invention includes a quiz terminal 100 connected to a quiz server through a communication server 200, and the quiz server 200 which transmits problem information to the quiz terminal 100, and scores an answer to a reactive quiz transmitted from the quiz terminal 100, thereby providing a reactive quiz service. Referring to Figure 1, the Internet is used as the communication network. However, a communication network other than the Internet may be used.

The quiz terminal 100 may transmit and receive data through the communication network, and include at least one output device among a display, a speaker, and a vibrator for quiz participants and at least one input device among a touch pad, a key pad, a remote controller, and a mouse. It is preferable to install software for quiz participation in a terminal which is widely distributed to general users. In other words, an application generated for quiz participation may be installed in a widely distributed device such as a personal computer (PC), a tablet PC, a mobile phone, a smartphone, a smart television (TV), etc. or dedicated hardware may be provided. In response to receiving a reactive quiz problem from the quiz server 200, the quiz terminal 100 displays the problem on the output device such that a participant may view the problem. When the participant confirms the output data and inputs an answer using the input device, the quiz terminal 100 transmits answer data related to the answer to the quiz server 200. In addition, when the quiz server 200 transmits data related to a best answer or data related to scoring or reflection of a result of scoring, the quiz terminal 100 outputs the data so that the participant views the data.

When question data related to a reactive quiz is received from the quiz server 200, and participants input answers, the number of which corresponds to types of answers according to a form of the reactive quiz included in the question data, the quiz terminal 100 transmits the answers to the quiz server 200 according to a transmission scheme of the answers. Answers are classified into quiz answers and survey answers. In this instance, some participants may transmit some of the survey answers by selecting quiz answers, or a participant may transmit both a survey answer and a quiz answer.

The quiz server 200 is implemented by installing an application capable of operating a reactive quiz service in a general PC or a server. The quiz server 200 may be configured using a web server or manufactured by a separate daemon program. The quiz server 200 may be configured to have some components as separate servers according to respective functions. In this case, communication means needs to be ensured to smoothly exchange information between the respective components.

The quiz server 200 may be configured as a general server system, and may be configured such that an application which can be operated in a widely distributed personal terminal such as a smartphone, a mobile phone, and a tablet PC, etc. or a smart TV is developed and installed therein.

Figure 2 illustrates a configuration of the quiz server 200. The quiz server 200 includes a communication module 210 for transmitting a quiz question to the quiz terminal 100 or receiving an answer to a quiz or a survey. The communication module 210 needs to correspond to a compatible hardware and protocol for smooth access of the quiz terminal 100. The communication module 210 may correspond to a module for Internet access, correspond to a module related to third generation (3G) communication or fourth generation (4G) communication, and use differently configured hardware or protocol.

A member management module 220 manages personal information of a participant that participates in the reactive quiz by accessing the quiz server 200 through the quiz terminal 100, maintains access using an ID and a password, and manages a reactive quiz participation history, accumulated ranking, team information, etc. The member management module 220 manages members by classifying participants into a plurality of teams according to a predetermined condition or separately designating a particular participant or a particular participating team for determination of a best answer to the reactive quiz. The personal information includes at least one of an ID, a password, a birthday, a blood type, an address, an academic background and a birthplace of a participant.

The participating team may correspond to a team created by automatically assorting a plurality of participants according to personal information, a team automatically created by a relation between participants, or a team assorted by selection of participants. The team may be created by assorting participants according to residences, genders, age groups, or scores of a previous quiz game. Alternatively, participants having conjugal relations may be automatically created as a team. An application scheme of creating the team is not restricted.

A quiz module 230 preferably designates and uses one participant as a team captain for each participating team in order to infer a best answer to the reactive quiz. In this way, it is possible to solve the match-type reactive quiz or the relation-type reactive quiz with a particular team captain configured as a team captain of each team. Here, in the match-type reactive quiz, an answer received from a quiz terminal used by the team captain may be determined to a best answer, and a score may be calculated and assigned according to a predetermined scheme based on the number or a rate corresponding to the best answer. The match-type reactive quiz may be processed in various schemes including a scheme in which a person whose answer does not correspond to the best answer is eliminated and a winning team is determined based on the number of survivors of each team.

The quiz module 230 operates to manage data related to a survey included in the reactive quiz, deliver reactive quiz data to the quiz terminal 100 through the communication module 210, determine a best answer based on an answer thereto, score the answer, and reflect a result scoring in a participant. The reactive quiz data includes at least one of question data, question data about the quiz, suggested answer data, hint data, and explanation data. Although not illustrated, the quiz module 230 further includes a timer to check arrival time of the answer to the reactive quiz.

A DB 240 performs a function of storing information related to members and data related to the reactive quiz using a storage area such as a memory, a hard disk, a network driver, etc.

The quiz module 230 classifies reactive quizzes into the survey-type reactive quiz, the match-type reactive quiz, and the relation-type reactive quiz, reconfigures data such as a survey, a quiz, an instance, etc. into question data of a reactive quiz according to a type of the reactive quiz, and transmits the reconfigured data to the quiz terminal 100. The quiz terminal 100 displays the question data of the reactive quiz on the output device such that the question data may be distinguished by a participant. The question data of the reactive quiz is configured as data having a form corresponding to at least one of video, text, sound, a picture, and a figure. The question data of the reactive quiz includes information about a type of a reactive quiz, the number and types of answers necessary for a reactive quiz, a transmission scheme of an answer, etc.

The quiz module 230 receives answers of participants (corresponding to answers to a quiz or a survey) according to a predetermined answer receiving scheme for a certain period of time. A case of repeatedly receiving inputs of all participants according to a predetermined order may correspond to the predetermined answer receiving scheme. Answers of all participants may be simultaneously received within a limited period of time, or an answer of a particular participant may be received.

The quiz module 230 separately receives and stores answers of respective participants. A participant may correspond to one participant or a participating team including a plurality of participants. When the participant corresponds to one participant, the quiz module 230 reflects a result of scoring in the one participant. When the participant corresponds to a participating team, the quiz module 230 reflects a result of scoring in one of or both a particular participating team and one particular participant included in the particular participating team.

In the survey-type reactive quiz, the quiz module 230 separates a survey from a question of a quiz, and separately receives an answer to the survey and the question corresponding to the quiz from each participant. In a reactive quiz, it is possible to receive both a survey answer and a quiz answer to a survey question and a quiz question from a participant. Alternatively, it is possible to receive one of a survey answer and a quiz answer depending on participants. It is preferable to continuously receive the survey question and the quiz question in one quiz question unit.

The quiz module 230 determines a best answer by a predetermined scheme through a separate statistical process or analysis process with respect to answers to the survey. The predetermined scheme of determining the best answer is related to the quiz question. For example, when the quiz question corresponds "Which survey has the second greatest number of answers?", the quiz module 230 may automatically determine a best answer by including a routine in which the number of received answers is accumulated for respective types of survey answers and a survey answer corresponding to the second greatest number of received answers is determined to be the best answer. By applying this scheme, an answer corresponding to a particular order from accumulated orders is determined to be the best answer for each survey answer, or an order of survey answers according to an accumulated ranking is determined to be the best answer.

The best answer may not be predetermined. Instead, the quiz module 230 may determine a best answer of a certain condition. For example, in Shiritori corresponding to an example of the relation-type reactive quiz, starting letters and ending letters of words received from participants are connected, the number of connected words is counted, and a team acquiring the greatest number wins. In this case, a best answer of a word received as a particular answer corresponds to a last letter. When the letter matches a letter of a subsequent word, the letter is regarded as a correct answer, and the best answer is replaced by a last letter again. In this way, the best answer may be continuously changed in one quiz.

The quiz module 230 scores a quiz answer of each participant by comparing the quiz answer with the best answer. Each answer is scored such that a submitted quiz answer is determined to be a correct answer if the submitted quiz answer matches the best answer, or a submitted quiz answer is determined to be a correct answer if the submitted quiz answer satisfies a relation with the best answer.

The quiz module 230 may determine whether a quiz answer satisfies a relation with a best answer and scores the quiz answer by determining a validity of the relation between the best answer and the quiz answer using a scheme unique to each reactive quiz. For example, in the rock-paper-scissors game, a best answer may be determined to be "scissors" when a particular survey answer received from a participant designated as a game operator corresponds to "rock". In this instance, a quiz answer received from another participant is determined to be a correct answer when the quiz answer corresponds to "scissors" or "paper", and determined to be a wrong answer when the quiz answer corresponds to "paper".

For one team including a plurality of participants in family relationships, the quiz module 230 may score an answer such that a best answer is determined by regarding a particular answer to a reactive quiz question "When is your first child's birthday?" received from one of the participants as a survey answer, and an answer of another participant is regarded as a quiz answer, thereby scoring the answer based on whether the answer matches the best answer. Here, whether the answer matches the best answer corresponds to whether a whole or partial quiz answer matches the best answer.

The quiz module 230 may determine, as a best answer for scoring, a particular answer received from a designated user or a particular answer received from an arbitrary participant included in a team in addition to an accumulated ranking of each survey answer.

The quiz module 230 reflects a result of scoring by increasing or decreasing a score of a participating team or one participant according to a predetermined scheme based on the result of scoring, whether non-response is present, and whether a survey has a response/non-response. The result of scoring may be reflected such that a particular participant is disqualified, qualification for participation is restored, and a score is initialized. In addition, in the survey-type reactive quiz, it is preferable to score respective survey answers of surveyed people based on response/non-response to induce active answers to a survey, or determine a scheme of reflecting the result of scoring in connection with the scoring.

When a type of a reactive quiz corresponds to a match type, and a particular person is matched, the quiz module 230 determines an answer of the particular person to be a best answer, and regards answers of remaining participants as quiz answers, thereby scoring answers. In addition, in the match-type reactive quiz, a team captain may be particularly determined for each team, and answers may be scored based on a conformity degree (%) between the team captain and teams members of the team or the number of matching answers. A result of storing may be reflected by increasing/decreasing a score of a particular participant or eliminating the particular participant/allowing the particular participant to return to the game.

The quiz module 230 may determine a best answer using a changed scheme. For example, the quiz module 230 may determine an answer received in a particular turn to be a best answer or an answer received the greatest number of times to be a best answer with respect to the match-type reactive quiz.

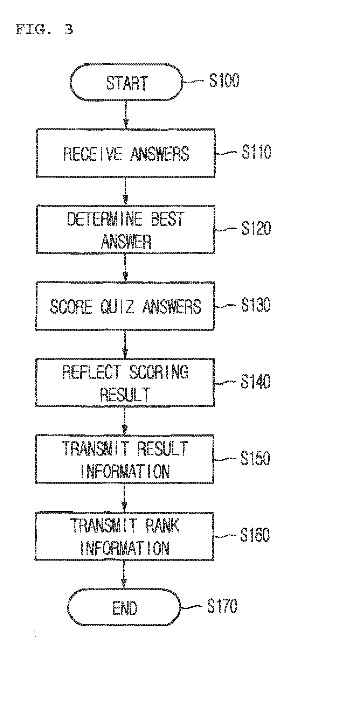

A description will be given of a method of providing or processing a reactive quiz service by the quiz module 230 with reference to Figure 3. The quiz module 230 transmits question data related to a reactive quiz to the quiz terminal 100 connected through a communication network. This process is not an essential process and thus a part of the process is omitted in Figure 3. In S100, the quiz module 230 receives answer data of the reactive quiz from the quiz terminal 100. The answer data may include a survey answer or a quiz answer according to a type of the reactive quiz, and may include both the survey answer and the quiz answer.

In S120, the quiz module 230 determines a "best answer" by analyzing the received survey answer. The survey answer is analyzed such that an accumulated value with respect to the same or a similar survey answer is calculated.

A process of counting the accumulated numbers is needed to specifically analyze the survey answer. For example, when survey answers to a survey "What do you wish to eat for a late-night meal today?" are summarized, it is possible to obtain a result of counting the accumulated numbers of the survey answers corresponding to Topokki (350 people), chicken (250 people), Ramen (80 people), chopped noodles (200 people), Sundae (512 people), others (300 people), etc.

A scheme of determining a best answer from the counted result is different according to a quiz question. For example, for a quiz question "Which late-night meal is selected the second greatest number of times?", "#2" is designated as a requirement for the best answer, and "Topokki" is finally determined as the best answer from the counted result based on the set value "#2".

Based on a requirement for the best answer of "#1 or #2" corresponding to another quiz question "Select two most popular late-night meals for today.", Topokki and Sundae are selected as the best answer, and answers are scored irrespective an order of Topokki and Sundae. In a process of scoring the answers, it is determined whether an answer to the quiz partially or totally matches the best answer. It is preferable to reflect a result of scoring according to a degree of matching.

Based on a requirement for the best answer of "#1, #2, and #3" corresponding to another quiz question "Guess three late-night meals for today in order of popularity.", "Sundae, Topokki and chicken" is determined to be the best answer, and the best answer is determined such that an order is determined.

For a quiz question "Noodles are more popular than Topokki as a late-night meal. (OX quiz)" with respect to the result of counting, it is possible to determine O or X as a best answer by comparing the accumulated numbers of Topokki with a sum of the accumulated numbers of Ramen and the accumulated numbers of chopped noodles according to a requirement for the best answer configured as "hit (Topokki) > hit (Ramen) + hit (chopped noodles)".

The specified configurations of #1, #2, #3, hit(), etc. correspond to a general example used as a type of rule for obtaining a best answer. # denotes an order, and the number on the right side of # denotes ranking information. The rule may be extended to a changed rule, or the changed rule may be applied.

A best answer may be determined such that the best answer is analyzed from a value resulting from the same survey question as that of a previous survey question and a current survey question value. For example, when an answer to a survey "What do you want to have for a late-night meal today?" has an accumulated value of an answer to a survey conducted last winter and an accumulated value of an answer to a currently conducted survey if today is summer, a range of fluctuation of each accumulated value may be analyzed to determine the best answer, thereby scoring an answer to a quiz "Which late-night meal increased most in popularity this summer when compared to last winter?".

In the survey-type reactive quiz, it is preferable to simultaneously receive an answer to a survey and an answer to a quiz. However, in some cases, certain time slots may be allocated to the survey and the quiz for each stage to receive answers. In this case, the present flowchart is slightly modified. In other words, prior to S120 or S130, the answer to the quiz may be separately received once more.

The quiz module 230 may determine the best answer using various schemes other than the scheme based on analysis of the accumulated value of the answer to the survey. For example, it is possible to employ a scheme of selecting one of several participants as a leader, and determining a survey answer transmitted from a terminal of the leader to be the best answer, or a scheme of determining a survey answer received first or in a particular turn such as a 101th turn among several survey answers to be the best answer.

The quiz module 230 scores a quiz answer of each participant to be scored based on the determined best answer in S130, and reflects a result of scoring in the participant using a predetermined scheme in S140. The reflection of the result of scoring may be linked to change of a total ranking, a ranking in a team, etc., or elimination and restoration of a particular participant or participating team.

The step S140 of reflecting the result of scoring is performed by a first scheme of increasing/decreasing a score of a particular participant based on the result of scoring or a second scheme of determining whether a particular participant is disqualified or allowed to return to the game. In this way, result information may be induced to change of ranking.

Subsequently, the quiz module 230 transmits data related to the result of scoring, a result of reflecting scoring, and change of ranking to a quiz terminal of a corresponding quiz participant in S150. Then, the quiz module 230 rearranges the ranking and transmits ranking information to the quiz terminal in S160.

In Figure 3, details of the step S120 of determining the best answer, the step S130 of scoring answers, and the step S140 of reflecting the result of scoring in a participant performed by the quiz module 230 are included in description of the quiz module 230 with reference to Figure 2, and thus will not be further described. The step S140 of reflecting the result of scoring may be processed such that a score of a participating team is increased/decreased or the participating team is eliminated/restored based on the result of scoring.

When a ranking or a total score of a participant is changed or the participant is eliminated or restores qualification for participation as a result of the step S140 of reflecting the result of scoring, the quiz module 230 further includes a step of transmitting associated data to the member management module 220 to manage a reactive quiz game participation history of the participant.

In addition, Figure 3 illustrates a method for only one reactive quiz game. However, the method may be applied to a case of including several reactive quizzes. In this case, it is preferable operate a reactive quiz service repeatedly for a target participant. It is preferable to receive responses from participants using a scheme in which a winner is determined by accumulating scores in a process of repeatedly providing a quiz service through several steps to determine a final winner or a final survivor.

In addition, it is possible to induce active responses from the participants by including a step of obtaining a distribution of answers or statistical data by analyzing answers to a quiz or a survey in the process of solving the reactive quiz, and a step of reconfiguring the data and transmitting the reconfigured data to quiz terminals of the participants. Here, when the reactive quiz service which includes several steps is successively provided, an answer to a quiz or a survey may be analyzed in each quiz step, in several steps, or after a whole reactive quiz ends.

The reactive quiz game method proposed by the present invention may be operated as a single reactive quiz. However, when a service is configured and provided such that a plurality of reactive quiz steps are provided to a plurality of participants, answers to a survey or a quiz are demanded within the same valid time in real time in each step, and a quiz winner wins a prize, and an answer of a participant is analyzed using personal information of the participant, it is possible to more specifically analyze a distribution of opinions, preferences, answers, etc. of target participants by applying a step of obtaining a distribution of opinions for respective types of the participants.

Although the present invention has been described in connection with the above-mentioned preferred embodiments, various modifications and changes can be made without departing from the essential and scope of the invention. Therefore, the scope of the appended claims may include the modifications and changes pertaining to the essential of the invention.

## Claims

1. A method of performing, by a quiz server, a reactive quiz game targeted to a plurality of participants, each of which uses a quiz terminal, accessing the quiz server through a communication network, the method comprising:
receiving an answer to a survey or a quiz input by the participant from the quiz terminal;
determining a best answer from the answer to the survey using a first scheme of determining a best answer from an accumulated ranking of the answer to the survey or a second scheme of determining a particular answer to the survey to be the best answer;
scoring the answer to the quiz using a first scheme of determining whether the answer to the quiz matches the best answer or a second scheme of determining validity of a correlation between the answer to the quiz and the best answer; and
reflecting a result of scoring in the participant using at least one of a first scheme of increasing or decreasing a score of the participant, a second scheme of initializing the score of the participant, and a third scheme of maintaining qualification for participation or disqualifying the participant.

2. The method according to claim 1, wherein the participant corresponds to one participant or a participating team including a plurality of people.

3. The method according to claim 1, wherein the quiz server receives only the answer to the survey from a quiz terminal corresponding to an object of a survey question, and receives only the answer to the quiz from a quiz terminal corresponding to an object of a quiz question.

4. An online reactive quiz game system providing a reactive quiz game to a participant using a quiz terminal, the system comprising:
the quiz terminal which communicates with a quiz server through a communication network, and transmits an answer to a quiz or a survey input by the participant to the quiz server; and
the quiz server which receives the answer to the survey or the quiz from the quiz terminal, determines a best answer using a first scheme of determining a best answer from an accumulated ranking of the answer to the survey or a second scheme of determining a particular answer to the survey to be the best answer, scores the answer to the quiz using a first scheme of determining whether the answer to the quiz matches the best answer or a second scheme of determining validity of a correlation between the answer to the quiz and the best answer, and reflects a result of scoring in the participant using at least one of a first scheme of increasing or decreasing a score of the participant, a second scheme of initializing the score of the participant, and a third scheme of maintaining qualification for participation or disqualifying the participant.
